# EUROPÄISCHE PATENTSCHRIFT

(11) **EP 4 537 001 B1**
(45) Veröffentlichungstag und Bekanntmachung des Hinweises auf die Patenterteilung: **01.04.2026**
(21) Anmeldenummer: 23732028.8
(22) Anmeldetag: 08.06.2023
(51) Int. Cl.: F16T 1/40

(54) **KONDENSATABLEITER ZUM ABLEITEN VON KONDENSAT**
CONDENSATE DRAIN FOR DRAINING CONDENSATE
PURGEUR DE CONDENSAT DESTINÉ À ÉVACUER UN CONDENSAT

(30) Priorität: 10.06.2022 DE 102022114720
(43) Veröffentlichungstag der Anmeldung: 16.04.2025
(73) Patentinhaber: GESTRA AG, 28215 Bremen (DE)
(72) Erfinder: JACOBSEN, Preben, 27749 Delmenhorst (DE); SCHRÖTER, Holger, 28832 Achim (DE)
(74) Vertreter: HL Kempner PartG mbB
(86) Internationale Anmeldenummer: PCT/EP2023/065366
(87) Internationale Veröffentlichungsnummer: WO 2023/237666

(56) Entgegenhaltungen:
- US-A- 3 575 199
- US-A1- 2007 006 918
- US-A1- 2017 254 474

## Beschreibung

Die Erfindung betrifft einen Kondensatableiter zum Ableiten von Kondensat, mit einem Gehäuse, einem in dem Gehäuse ausgebildeten Innenraum zur Aufnahme eines Fluids, einem in dem Gehäuse ausgebildeten Einlass zum Einleiten von Fluid in den Innenraum des Gehäuses, einem in dem Gehäuse ausgebildeten Auslass zum Ableiten von Fluid aus dem Innenraum des Gehäuses, einem in dem Gehäuse angeordneten Ventil mit einem Ventilkörper, welcher dazu eingerichtet ist, in eine Freigabestellung und eine Schließstellung bewegt zu werden, wobei der Ventilkörper in der Freigabestellung einen Fluidfluss zwischen dem Innenvolumen und dem Auslass freigibt und in der Schließstellung einen Fluidfluss zwischen dem Innenvolumen und dem Auslass sperrt, sowie einer Antriebseinrichtung zum Bewegen des Ventilkörpers, welche dazu eingerichtet ist, den Ventilkörper in die Freigabestellung und/oder die Schließstellung zu bewegen.

Derartige Kondensatableiter sind aus dem Stand der Technik bekannt. Sie werden dazu eingesetzt, um in dampfführenden Anlagen beispielsweise der chemischen oder energetischen Industrie entstehendes Kondensat abzuleiten. Aus dem Stand der Technik sind beispielsweise Schwimmer-Kondensatableiter bekannt, die an bestimmten Positionen in einer dampfführenden Anlage montiert sind, an denen Ansammlungen von Kondensat zu erwarten sind. Bei solchen Schwimmer-Kondensatableitern erfolgt das Abführen des Kondensats in Abhängigkeit vom Füllstand des Kondensats im Gehäuse des Schwimmer-Kondensatableiters. Übersteigt der Füllstand im Gehäuse ein vorbestimmtes Level oder Niveau, schwimmt eine im Gehäuse angeordnete Schwimmerkugel, die mit einem Ventil gekoppelt ist, auf, wodurch das Ventil betätigt und der Strömungsquerschnitt im Kondensatableiter geöffnet wird. Das Kondensat strömt dann in Richtung des Auslasses aus dem Gehäuse ab. Fällt der Füllstand unter ein vorbestimmtes Mindestmaß, schließt das Ventil durch die sich absenkende Schwimmerkugel. Die Funktion des Schwimmer- Kondensatableiters ist dabei weitestgehend unabhängig von der Temperatur des Kondensats und ermöglicht Druckschwankungen in der Anlage.

Wenngleich sich derartige aus dem Stand der Technik vorbekannte Kondensatableiter bewährt haben, besteht dennoch Raum für Verbesserungen. Grundsätzlich weisen Schwimmer-Kondensatableiter in Abhängigkeit von unter anderem den Dampfdrücken, ein vergleichsweise großes Volumen auf, um einen Schwimmer mit entsprechendem Auftrieb aufnehmen zu können. Darüber hinaus ist das Ansprechverhalten derartiger Kondensatableiter aufgrund deren Bauart und Mechanik fest vorgegeben. Im Übrigen hat es sich als herausfordernd erwiesen, derartige klassische Schwimmer-Kondensatableiter zu überwachen und insbesondere in digitalisierte Anlage einzubinden.

Ferner sind erste Konzepte bekannt, die eine motorische Antriebseinrichtung zum Bewegen eines Ventilkörpers aufweisen in Druckluftsystem verwenden; in Anlagen mit hohen Dampfdrücken und Dampftemperaturen konnten derartige Antriebe nicht unter Sicherstellung einer erforderlichen Dichtheit und Temperaturbeständigkeit verwendet werden.

Aus US 2017/254474 A1 ist ein Dampfableiter mit einem Ventil bekannt, wobei das Ventil zwischen einem offenen Zustand für eine Ableitung mit hohem Durchsatz und einem geschlossenen Zustand für eine Ableitung mit niedrigem Durchsatz einstellbar ist. US 3 575 199 A und US 2007/006918 A1 betreffen jeweils elektromagnetisch betätigte Ventilanordnungen für Kondensatableiter.

Vor diesem Hintergrund lag der Erfindung die Aufgabe zugrunde, einen Kondensatableiter der eingangs bezeichneten Art dahingehend weiterzubilden, dass die im Stand der Technik aufgefundenen Nachteile möglichst weitgehend behoben werden. Insbesondere war ein Kondensatableiter anzugeben, der kompakt ausgebildet ist, einfach zu überwachen ist und darüber hinaus auch bei Verwendung in Anlagen mit hohen Dampftemperaturen und Dampfdrücken einen sicheren Betrieb ermöglicht, wobei eine hohe Dichtigkeit gegenüber der Umgebung zu erreichen ist.

Erfindungsgemäß wird die Aufgabe durch einen Kondensatableiter gemäß Anspruch 1 gelöst. Gemäß einiger Ausführungsformen ist die Antriebseinrichtung als elektromagnetischer oder magnetisch wirkender Antrieb ausgebildet oder weist einen elektromagnetischen Antrieb auf. Die Erfindung macht sich die Erkenntnis zunutze, dass durch die Verwendung eines solchen elektromagnetischen Antriebes eine präzise Bewegung des Ventilkörpers ermöglicht wird, wobei gleichzeitig sichergestellt wird, dass eine hohe Dichtigkeit des Kondensatableiters erreicht wird. Vorteilhaft ist des Weiteren eine gute Einbindbarkeit in auch digitalisierte Steuerungssysteme, die Möglichkeit einer kompakten Bauweise und eine präzise Betätigung des Ventilkörpers.

Erfindungsgemäß weist der Antrieb ein bewegliches Antriebsteil auf, welches in dem Innenraum des Gehäuses angeordnet ist und mit dem Ventilkörper gekoppelt ist, und ein statisches Antriebsteil, welches außerhalb des Innenraums angeordnet und mittels eines Wandabschnitts von diesem fluiddicht separiert ist, wobei das statische Antriebsteil dazu eingerichtet ist, das bewegliche Antriebsteil mittels einer magnetischen Antriebskraft anzutreiben.

Die Erfindung macht sich die Erkenntnis zunutze, dass das bewegliche Antriebsteil im Innenraum des Gehäuses von dem statischen Antriebsteil außerhalb des Innenraums fluiddicht separiert ist. Auf diese Weise wird ein Antrieb des Ventilkörpers ermöglicht, ohne dass der Antrieb etwa eine bewegliche Durchführung durch das Gehäuse aufweisen müsste. Auf diese Weise wird gewissermaßen der Innenraum abgekapselt von dem statischen Antriebsteil und hierdurch erreicht, dass der Kondensatableiter auch bei Verwendung in Zusammenschau mit hohen Dampftemperaturen und hohen Dampfdrücken stets dicht verschlossen bleibt. Gleichzeitig ermöglicht der betreffende Antrieb eine kompakte Ausbildung des Kondensatableiters, ohne dass ein großes Innenvolumen zur Aufnahme eines entsprechend dimensionierten Schwimmers erforderlich ist. Der Antrieb kann darüber hinaus durch geeignete Ansteuerung desselben an die gewünschten Betriebsparameter angepasst werden.

Gemäß einer bevorzugten Ausführungsform ist der Antrieb als Linearmotor ausgebildet, wobei das bewegliche Antriebsteil als Läufer und das statische Antriebsteil als Stator ausgebildet ist. Die Verwendung eines Linearmotors hat sich als gut geeignet zum Antrieb des Ventilkörpers erwiesen, wobei das Grundprinzip des Linearmotors die gekapselte Ausbildung von Läufer und Stator ermöglicht.

Die Erfindung wird dadurch weitergebildet, dass die Antriebseinrichtung ein Rohr aufweist, welches innenseitig mit dem Gehäuse fluidleitend verbunden ist und in dessen Inneren der Läufer aufgenommen ist, wobei die Außenseite des Rohrs gegenüber dem Gehäuse abgedichtet ist, wobei der Stator an der Außenseite des Rohrs angeordnet oder ausgebildet ist. Dynamische, stärkerem Verschleiß unterliegende Dichtungen lassen sich erfindungsgemäß vermeiden. Durch die Anordnung des Stators an der Außenseite des Rohrs und die Aufnahme des Läufers im Inneren des Rohrs wird erneut der Gedanke der Abkapselung des Rohrinnenraums und damit des Läufers von dem Stator an der Rohraußenseite erreicht. Darüber hinaus stellt die rohrförmige Grundform eine besonders geeignete Führung für den Läufer innerhalb des Rohrs bereit.

Vorzugsweise weist der Läufer wenigstens zwei Permanentmagneten auf, welche insbesondere als Ring- oder Scheibenmagnet ausgebildet sind. Gemäß einer bevorzugten Ausführungsform sind die Permanentmagneten durch ein nicht magnetisches Distanzstück voneinander separiert. Gemäß einer bevorzugten Ausführungsform weist der Stator wenigstens zwei Spulen auf, die dazu eingerichtet sind, ein magnetisches Feld zum Antrieb des Läufers zu erzeugen.

Die Erfindung wird dadurch weitergebildet, dass der Linearmotor dazu eingerichtet ist, eine Position des Läufers kapazitativ zu ermitteln. Auf Basis der obigen Merkmale wird nicht nur erreicht, dass der Läufer sicher und unter Übertragung der erforderlichen Kräfte angetrieben werden kann, sondern es wird darüber hinaus erreicht, dass auch dessen Position ermittelt wird, wodurch gleichzeitig Rückschlüsse auf die Position des Ventilkörpers möglich sind. Auf diese Weise lässt sich mit anderen Worten der Öffnungszustand des Ventils überwachen und diese Information zur Steuerung des Kondensatableiters nutzen.

Die Erfindung wird ferner dadurch weitergebildet, dass der Ventilkörper als Rollkugel ausgebildet ist, welche dazu eingerichtet ist, in der Freigabestellung einen Ventilsitz des Ventils freizugeben und in der Sperrstellung den Ventilsitz zu verschließen. Gemäß einer bevorzugten Ausführungsform ist der Ventilkörper ferner dazu eingerichtet, den Ventilsitz in wenigstens einer Zwischenstellung, welche zwischen der Freigabestellung und der Sperrstellung angeordnet ist, abschnittsweise freizugeben. Auf diese Weise wird es ermöglicht, das Ventil entweder vollständig zu öffnen, vollständig zu schließen oder aber auch nur teilweise zu öffnen. Die Abgabe von Kondensat aus dem Kondensatableiter wird hierdurch feinfühlig steuerbar, indem der Ventilkörper in die aus Steuerungsgründen gewünschte Position verbracht wird.

Gemäß einer bevorzugten Ausführungsform ist die Rollkugel an einem Rollkugelhebel angeordnet, wobei der Rollkugelhebel mit dem Läufer derart verbunden ist, dass eine translatorische Bewegung des Läufers die Rollkugel von der Freigabestellung in die Sperrstellung und umgekehrt bewegt. Durch die Verwendung eines solchen Rollkugelhebels können darüber hinaus unter Berücksichtigung der Hebelgesetze die erforderlichen Betriebskräfte auf die Rollkugel aufgebracht werden.

Gemäß einer bevorzugten Ausführungsform wird der Kondensatableiter in einer Betriebsposition im Wesentlichen waagerecht durchströmt, wobei der Läufer des Linearmotors in eine im Wesentlichen waagerechte Richtung angetrieben wird.

Gemäß einer alternativ bevorzugten Ausführungsform wird der Kondensatableiter in einer Betriebsposition im Wesentlichen senkrecht durchströmt, wobei der Läufer des Linearmotors in eine im Wesentlichen senkrechte Richtung angetrieben wird.

Im Falle einer senkrechten Durchströmung des Kondensatableiters ist vorzugsweise vorgesehen, dass der Rollkugelhebel mittels eines Federelements derart am Gehäuse gestützt ist, dass eine Bewegung des Rollkugelhebels in die Freigabestellung durch eine Federkraft der Feder unterstützt wird und eine Bewegung des Rollkugelhebels in die Schließstellung die Feder spannt. Auf diese Weise wird erreicht, dass bei senkrechter Durchströmung des Kondensatableiters die Betätigungskräfte des Rollkugelhebels in Richtung der Schließstellung und der Freigabestellung in etwa gleich ausfallen, wodurch eine Steuerung bzw. Regelung des Linearantriebs erleichtert wird.

Gemäß einer alternativ bevorzugten Ausführungsform ist der Antrieb als Axialflussmotor ausgebildet, wobei das bewegliche Antriebsteil als Rotor und das statische Antriebsteil als Stator ausgebildet ist. Ein solcher Axialflussmotor macht sich im Wesentlichen das gleiche Betriebskonzept zunutze wie ein Linearantrieb, setzt die Bewegung jedoch nicht in eine Linearbewegung, sondern in eine Rotationsbewegung um.

Vorzugsweise weist der Rotor drei oder mehr Permanentmagneten, insbesondere sechs Permanentmagneten, auf, welche insbesondere äquidistant von einer Drehachse des Rotors und in Umfangsrichtung gleichmäßig voneinander beabstandet sind. Auf diese Weise wird die Übertragung hinreichender Betriebskräfte ermöglicht und darüber hinaus eine gute Steuerbarkeit des Axialflussmotors erreicht.

Gemäß einer bevorzugten Ausführungsform weist der Stator drei oder mehr Spulen, insbesondere sechs Spulen, auf, die dazu eingerichtet sind, ein magnetisches Feld zum Antrieb des Rotors zu erzeugen, wobei die Spulen insbesondere den gleichen Abstand von der Drehachse des Rotors aufweisen wie die Magneten, insbesondere wobei wenigstens eine, insbesondere sämtliche der Spulen einen ferromagnetischen Kern zur Verstärkung des Magnetfelds aufweisen. Durch die Ausbildung des Stators mit drei oder mehr, insbesondere sechs Spulen, wird eine sichere Kraftübertragung vom Stator auf den Rotor ermöglicht. Durch den ferromagnetischen Kern erfolgt darüber hinaus eine Verstärkung des Magnetfelds.

Die Erfindung wird dadurch weitergebildet, dass der Rotor innenseitig einer Gehäusewand des Innenraums aufgenommen ist und wobei der Stator außenseitig an der Gehäusewand angeordnet ist. Auf diese Weise wird erreicht, dass der Rotor dichtend abgekapselt ist von dem Stator, sodass ein Austritt von Dampf aus dem Gehäuse sicher vermieden wird. Es sind keine beweglichen Teile durch eine Gehäuseöffnung durchzuführen, sodass das Leckagerisiko insgesamt deutlich reduziert wird.

Gemäß einer bevorzugten Ausführungsform ist der Rotor drehfest mit einer Spindel verbunden, wobei die Spindel drehbeweglich an dem Gehäuse gelagert ist. Die Erfindung wird dadurch weitergebildet, dass der Ventilkörper als um eine Drehachse drehbare Scheibe mit einer Durchlassausnehmung ausgebildet ist, wobei die Durchlassausnehmung durch Rotation der Scheibe in die Freigabestellung derart in Überdeckung mit einem Strömungskanal gebracht wird, dass eine fluidleitende Verbindung zu dem Auslass freigegeben wird und die Scheibe durch Rotation in die Schließstellung eine fluidleitende Verbindung zu dem Auslass sperrt. Gemäß einer bevorzugten Ausführungsform weist die Spindel einen Spindelläufer auf, der über einen Betätigungsabschnitt mit der Scheibe derart gekoppelt ist, dass eine axiale Bewegung des Spindelläufers entlang der Spindel eine Rotation der Scheibe in die Freigabestellung und die Schließstellung bewirkt.

Gemäß einer bevorzugten Weiterbildung ist der Befestigungsabschnitt an einem dem Spindelläufer abgewandten Ende schwenkbar gelagert, wobei die Scheibe einen Nocken aufweist, der an einer Nut des Betätigungsabschnitts beweglich geführt ist, derart, dass eine Schwenkbewegung des Betätigungsabschnitts eine Rotation der Scheibe bewirkt. Gemäß einer bevorzugten Ausführungsform ist die Scheibe eine obere Scheibe, wobei unterhalb der oberen Scheibe eine untere Scheibe angeordnet ist, die als Drehlager für die obere Scheibe dient, wobei insbesondere die obere Scheibe mittels eines Federelements gegen die untere Scheibe gedrückt wird. Auf diese Weise wird erreicht, dass der Betätigungswiderstand aufgrund der Ausbildung von zwei übereinander angeordneten Scheiben reduziert wird. Vorzugsweise ist wenigstens eine der Scheiben bzw. sind insbesondere beide Scheiben aus einem keramischen Werkstoff ausgebildet. Erneut werden hierdurch das Reibungsverhalten und der Verschleiß positiv beeinflusst.

Gemäß einer alternativ bevorzugten Weiterbildung ist der Ventilkörper als Ventilstift ausgebildet, welcher drehbar an einer Ventilbuchse aufgenommen ist, und wobei der Ventilstift eine Auslassnut aufweist, welche in der Freigabestellung mit einer in der Ventilbuchse ausgebildeten Durchlassöffnung in fluidleitender Verbindung steht und einen Fluidfluss durch das Ventil freigibt und in einer Schließstellung einen Fluidfluss durch das Ventil sperrt, wobei der Ventilkörper insbesondere zusätzlich in eine Zwischenstellung bringbar ist, in der die Auslassnut zumindest teilweise in fluidleitender Verbindung mit der Durchlassöffnung steht.

Die Erfindung wird dadurch weitergebildet, dass der Ventilstift mit einem Hebel verbunden ist und wobei der Hebel mit dem Läufer derart verbunden ist, dass eine translatorische Bewegung des Läufers den Ventilstift rotatorisch von der Freigabestellung in die Sperrstellung und umgekehrt bewegt. Auf diese Weise erfolgt eine Transformation einer translatorischen Bewegung des Läufers in eine rotatorische Bewegung zur Betätigung des Ventilstiftes.

Gemäß einer bevorzugten Ausführungsform weist der Kondensatableiter eine Sensoreinrichtung zum Detektieren mindestens eines Betriebszustandes des Fluids und/oder des Kondensatableiters und zum Bereitstellen mindestens eines Signals, das den mindestens einen Betriebszustand repräsentiert, auf. Vorzugsweise weist der Kondensatableiter ferner eine Steuerungseinrichtung auf, die ausgebildet ist, das mindestens eine Signal zu empfangen und ein Steuerungssignal abzugeben an die Antriebseinrichtung zum Bewegen des Ventilkörpers und/oder an die übergeordnete Steuerung. Die Sensoreinrichtung und/oder Steuerungseinrichtung kann unmittelbar dem Kondensatableiter zugeordnet oder Teil von diesem sein oder alternativ auch als individuelles mit dem Kondensatableiter gekoppeltes Bauteil ausgebildet sein. In vorteilhafter Weise wird durch diesen Aspekt des Kondensatableiters erreicht, dass von der Sensoreinrichtung bereitgestellte Signale zum Ansteuern der Antriebseinrichtung, also insbesondere des elektromagnetisch oder magnetisch wirkenden Antriebs oder elektromagnetischen Antriebs übertragen werden, also ein steuerungstechnisch autonomes System erreicht wird, welches auf von der Sensoreinrichtung gemessenen Werten basiert, die für die Betätigung des Antriebs zum Steuern und Bewegen des Ventilkörpers verwendet werden. Dies weist gegenüber beispielsweise Schwimmer-Kondensatableitern weitere Vorteile auf, die beispielsweise darin bestehen, dass Sensordaten erfasst, weiterverarbeitet, ausgewertet und zum Ansteuern des Kondensatableiters verwendet werden können, z.B. in einem integrierten Steuerungssystem mit hohen Anteilen an Digitaltechnik.

Die Erfindung wird dadurch weitergebildet, dass die Sensoreinrichtung eine an dem Gehäuse ausgebildete Niveauelektrode zum Erfassen eines Niveaus des Fluids aufweist, wobei sich die Niveauelektrode vorzugsweise in der Betriebsposition im Wesentlichen senkrecht erstreckt, und welche dazu eingerichtet ist, ein Fluidniveau in dem Gehäuse zu sensieren.

Vorzugsweise weist die Sensoreinrichtung einen Hall-Sensor auf, welcher dazu eingerichtet ist, eine Position des Läufers und/oder Rotors zu sensieren und insbesondere aus der Position des Läufers und/oder Rotors eine Ventilstellung zu ermitteln.

Vorzugsweise ist die Sensoreinrichtung ein in dem Gehäuse aufgenommener Drucksensor und/oder Temperatursensor.

Die Erfindung wird dadurch weitergebildet, dass die Steuerungseinrichtung kabelgebunden oder kabellos signalleitend mit den Sensoren verbunden ist, wobei die Steuerungseinrichtung dazu eingerichtet ist, die Antriebseinrichtung derart anzusteuern, dass diese den Ventilkörper in Abhängigkeit von einem Messwert wenigstens eines der Sensoren in die Schließstellung oder die Freigabestellung bewegt. Vorzugsweise ist die Steuerungseinrichtung ferner dazu eingerichtet, den Ventilkörper in eine Zwischenstellung zwischen der Schließstellung und der Freigabestellung zu bewegen.

Die Erfindung wird dadurch weitergebildet, dass an dem Gehäuse, insbesondere an der Antriebseinrichtung, ein Peltier-Element angeordnet ist, welches dazu eingerichtet ist, aus einer Temperaturdifferenz zwischen einer Gehäusetemperatur und einer Umgebungstemperatur des Gehäuses elektrische Energie zu generieren und/oder wobei der Kondensatableiter eine externe Energieversorgung aufweist. Auf diese Weise wird es ermöglicht, dem Kondensatableiter entweder von einer externen Energiequelle Energie zuzuführen oder aber die Energie selbst zu generieren unter Ausnutzung des Peltier-Effekts. Die Erfindung wird dadurch weitergebildet, dass das Peltier-Element mit der Antriebseinrichtung und/oder der Steuerungseinrichtung verbunden ist und wobei die von dem Peltier-Element generierte elektrische Energie zum Betrieb der Antriebseinrichtung und/oder der Steuerungseinrichtung verwendet wird.

Vorzugsweise weist die Steuerungseinrichtung eine Datenschnittstelle auf, welche dazu eingerichtet ist, Daten von einem drahtgebundenen oder drahtlosen Netzwerk zu empfangen und/oder Daten an ein drahtgebundenes oder drahtloses Netzwerk zu senden, wobei die Daten wenigstens eines der Folgenden aufweist: Messwerte wenigstens eines der Sensoren, Position des Läufers oder des Rotors als Indikator für die Ventilstellung,

Steuerungsdaten zur Steuerung der Antriebseinrichtung. Auf diese Weise wird es ermöglicht, die Antriebseinrichtung bzw. den Kondensatableiter über eine externe Steuerung zu steuern und betreffende Messwerte, wie beispielsweise das Fluidniveau, Drücke, Temperaturen, Position des Läufers oder Rotors, an ein entsprechendes Datennetzwerk weiterzugeben. Vorzugsweise werden die Daten in einer Cloud gespeichert oder aus einer Cloud an den Kondensatableiter übertragen. So können vorteilhaft beispielsweise Daten betreffend eine chemische, energietechnische oder andere Industrieanlage mittels eines erfindungsgemäßen Kondensatableiters erfasst und ausgewertet werden.

Die Erfindung ist vorstehend unter Bezugnahme auf einen Kondensatableiter beschrieben worden. In einem weiteren Aspekt, der nicht Teil der Erfindung ist, ist ein Verfahren zum Ableiten von Kondensat, insbesondere unter Verwendung eines Kondensatableiters nach mindestens einem der vorstehenden Ausführungsbeispiele zu erwähnen, das die folgenden Schritte aufweist: Sensieren eines Messwertes, welcher indikativ für ein Fluidniveau innerhalb eines Gehäuseinnenraums des Kondensatableiters ist, Ansteuern einer Antriebseinrichtung derart, dass diese einen Ventilkörper des Kondensatableiters in Abhängigkeit von dem Messwert in die Schließstellung oder die Freigabestellung bewegt.

Das Verfahren macht sich die gleichen Vorteile und bevorzugten Ausführungsformen zunutze wie der erfindungsgemäße Kondensatableiter und umgekehrt. Diesbezüglich wird auf die obigen Ausführungen verwiesen und deren Inhalt hier mit einbezogen.

Die Erfindung wird nachfolgend anhand bevorzugter Ausführungsbeispiele unter Bezugnahme auf die beigefügten Figuren näher beschrieben.

Hierbei zeigen:
- Fig. 1: ein erstes Ausführungsbeispiel eines erfindungsgemäßen Kondensatableiters in einer Schnittansicht in einem ersten Betriebszustand;
- Fig. 2: eine Detailansicht des Kondensatableiters gemäß Fig. 1;
- Fig. 3: das Ausführungsbeispiel des erfindungsgemäßen Kondensatableiters gemäß den Fig. 1 und 2 in einem zweiten Betriebszustand;
- Fig. 4 und 5: ein zweites Ausführungsbeispiel eines erfindungsgemäßen Kondensatableiters in Schnittansichten;
- Fig. 6: ein drittes Ausführungsbeispiel eines erfindungsgemäßen Kondensatableiters in einer Schnittansicht;
- Fig. 7: ein viertes Ausführungsbeispiel eines erfindungsgemäßen Kondensatableiters in einer Schnittansicht;
- Fig. 8: eine Detaildarstellung eines Abschnitts des Kondensatableiters gemäß Fig. 8;
- Fig. 9, 10A, 10B: Detaildarstellungen des Kondensatableiters gemäß Fig. 7 in unterschiedlichen Ansichten.

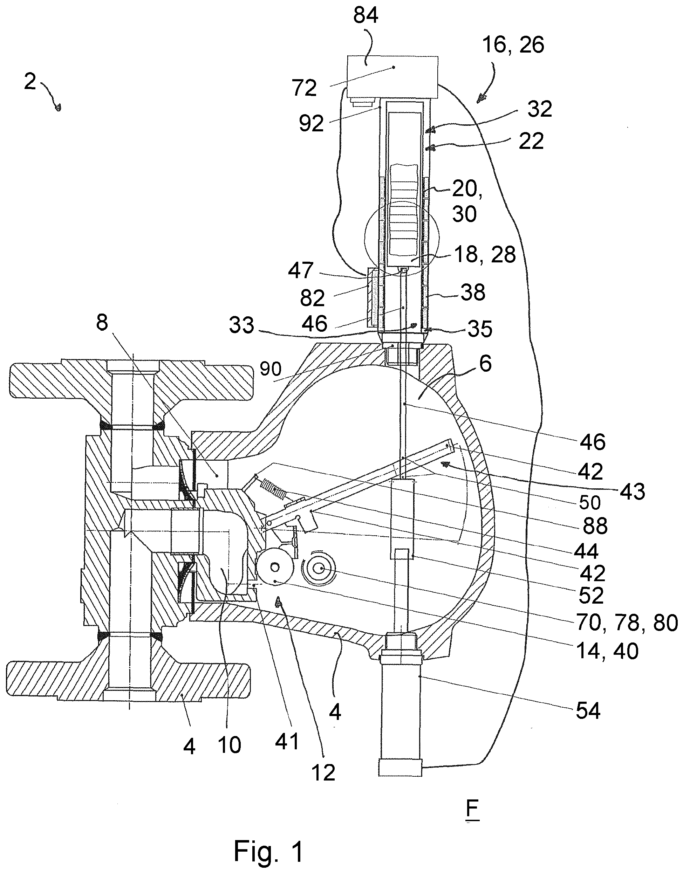

Die Fig. 1 bis 3 zeigen einen Kondensatableiter 2 zum Ableiten von Kondensat. Der Kondensatableiter 2 weist ein Gehäuse 4 auf. In dem Gehäuse 4 ist ein Innenraum 6 ausgebildet, der zur Aufnahme eines Fluids eingerichtet ist. In dem Gehäuse 4 ist ferner ein Einlass 8 ausgebildet. Der Einlass 8 ist zum Einleiten von Fluid in den Innenraum 6 des Gehäuses 4 eingerichtet. In dem Gehäuse 4 ist ferner ein Auslass 10 angeordnet. Der Auslass 10 ist zum Ableiten von Fluid aus dem Innenraum 6 des Gehäuses 4 eingerichtet. In dem Gehäuse 4 ist ferner ein Ventil 12 angeordnet. Das Ventil 12 weist einen Ventilkörper 14 auf, welcher dazu eingerichtet ist, in eine Freigabestellung F und eine Schließstellung S bewegt zu werden. Der Ventilkörper 14 gibt in der Freigabestellung F einen Fluidfluss zwischen dem Innenraum 6 und dem Auslass 10 frei und sperrt in der Schließstellung S einen Fluidfluss zwischen dem Innenraum 6 und dem Auslass 10. Der Kondensatableiter 2 weist ferner eine Antriebseinrichtung 16 zum Bewegen des Ventilkörpers 14 auf.

Die Antriebseinrichtung 16 ist dazu eingerichtet, den Ventilkörper 14 in die Freigabestellung F und/oder die Schließstellung S zu bewegen. Die Antriebseinrichtung 16 ist als elektromagnetischer oder magnetisch wirkender Antrieb 16 ausgebildet. Die Antriebseinrichtung 16 weist ein bewegliches Antriebsteil 18 auf, welches in dem Innenraum 6 des Gehäuses 4 angeordnet ist und mit dem Ventilkörper 14 gekoppelt ist.

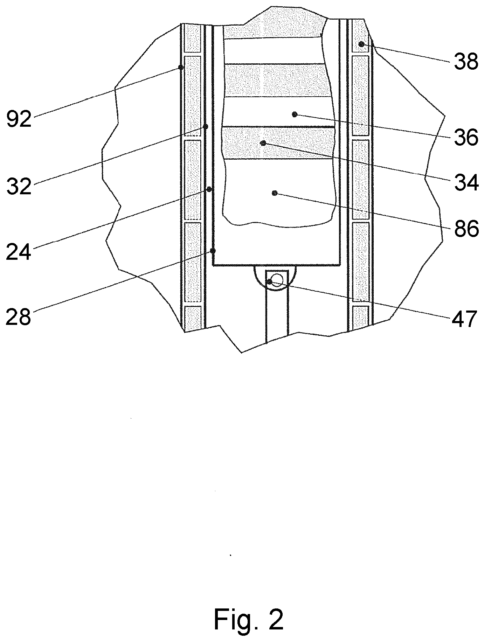

Die Antriebseinrichtung 16 weist ferner ein statisches Antriebsteil 20 auf, welches außerhalb des Innenraums 6 angeordnet und mittels eines Wandabschnitts 22 von diesem fluiddicht separiert ist. Das statische Antriebsteil 20 ist dazu eingerichtet, das bewegliche Antriebsteil 18 mittels einer magnetischen Antriebskraft anzutreiben. In den Fig. 1 und 2 befindet sich der Ventilkörper 14 in der Freigabestellung F, sodass ein Fluidfluss zwischen dem Innenraum 6 und dem Auslass 10 freigegeben wird.

Die Antriebseinrichtung 16 ist als Linearmotor 26 ausgebildet. Das bewegliche Antriebsteil 18 ist als Läufer 28 ausgebildet. Das statische Antriebsteil 20 ist als Stator 30 ausgebildet. Die Antriebseinrichtung 16 weist ein Rohr 32 auf, welches innenseitig mit dem Gehäuse 4 fluidleitend verbunden ist. In einem Inneren 33 des Rohrs 32 ist der Läufer 28 aufgenommen. Eine Außenseite 35 des Rohrs 32 ist gegenüber dem Gehäuse 4 abgedichtet, verschweißt oder verlötet. Der Stator 30 ist an der Außenseite 35 des Rohrs 32 angeordnet. Der Läufer 28 weist Permanentmagneten 34 auf, welche als Ring- oder Scheibenmagnet ausgebildet sind. Die Permanentmagneten 34 sind mittels jeweils eines Distanzstückes 36 voneinander separiert. Der Stator 30 weist wenigstens zwei Spulen, im vorliegenden Ausführungsbeispiel eine größere Anzahl von Spulen auf, die dazu eingerichtet sind, ein magnetisches Feld zum Antrieb des Läufers 28 zu erzeugen. Ferner ist der Linearmotor 26 dazu eingerichtet, eine Position des Läufers 28 kapazitativ zu ermitteln.

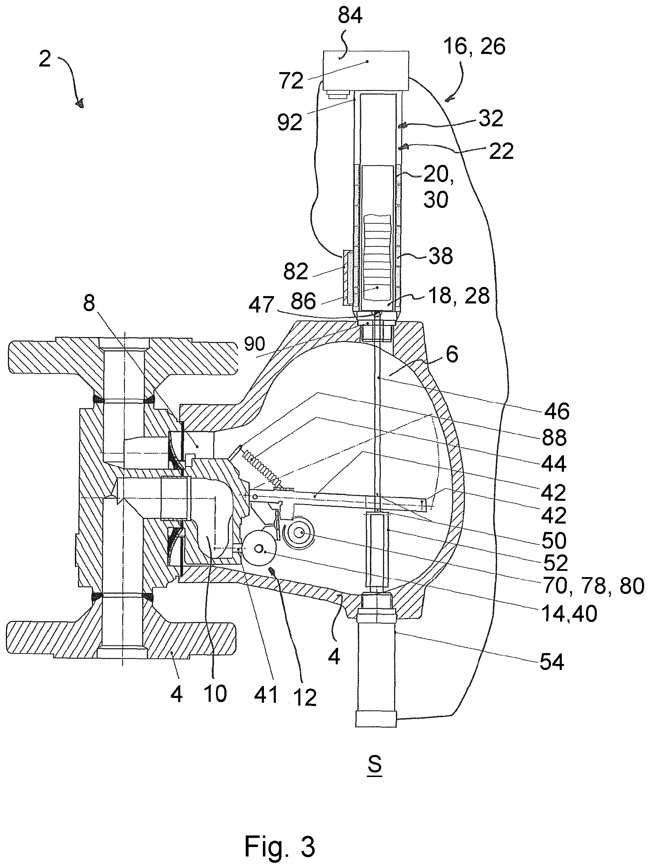

Bei dem in den Fig. 1 bis 3 gezeigten Ausführungsbeispiel ist der Ventilkörper 14 als Rollkugel 40 ausgebildet. Die Rollkugel 40 ist dazu ausgebildet, in der Freigabestellung F einen Ventilsitz 41 des Ventils 12 freizugeben und in der Sperrstellung S den Ventilsitz zu verschließen. In den Fig. 1 und 2 ist, wie bereits ausgeführt, die Freigabestellung F gezeigt; in Fig. 3 die Schließstellung S. Der Ventilkörper 14 ist ferner dazu eingerichtet, den Ventilsitz 41 in wenigstens einer Zwischenstellung Z abschnittsweise freizugeben. Die Zwischenstellung Z liegt zwischen der Freigabestellung F und der Sperrstellung S. Die Rollkugel 40 ist an einem Rollkugelhebel 42 angeordnet. Der Rollkugelhebel 42 ist mit dem Läufer 28 derart verbunden, dass eine translatorische Bewegung des Läufers 28 die Rollkugel 40 von der Freigabestellung F in die Sperrstellung S und umgekehrt bewegt.

Bei dem in den Fig. 1 bis 3 gezeigten Ausführungsbeispiel wird der Kondensatableiter in einer Betriebsposition im Wesentlichen senkrecht durchströmt. Insoweit wird auch der Läufer 28 des Linearmotors 26 in eine im Wesentlichen senkrechte Richtung angetrieben. Der Rollkugelhebel 42 ist mittels eines Federelements 44 und eines Federlagers 88 derart am Gehäuse 4 gestützt, dass eine Bewegung des Rollkugelhebels 42 in die in den Fig. 1 und 2 gezeigte Freigabestellung F durch eine Federkraft des Federelements 44 unterstützt wird. Eine Bewegung des Rollkugelhebels 42 in die Schließstellung S spannt das Federelement 44.

Der Kondensatableiter 2 weist ferner eine Sensoreinrichtung 70 zum Detektieren mindestens eines Betriebszustandes des Fluids und/oder des Kondensatableiters 2 auf. Der Kondensatableiter 2 weist ferner eine Steuerungseinrichtung 72 auf, die ausgebildet ist, ein Steuerungssignal an die Antriebseinrichtung 16 abzugeben, zum Bewegen des Ventilkörpers 14. Die Sensoreinrichtung 70 weist ferner einen in dem Gehäuse 4 aufgenommenen Drucksensor 78 sowie einen Temperatursensor 80 auf. Die Steuerungseinrichtung 72 ist kabelgebunden oder kabellos signalleitend mit den Sensoren 74, 78, 80 verbunden. Sie Steuerungseinrichtung 72 ist dazu eingerichtet, die Antriebseinrichtung 16 derart anzusteuern, dass diese den Ventilkörper 14 in Abhängigkeit von einem Messwert wenigstens eines der Sensoren 74, 78, 80 in die Schließstellung S oder die Freigabestellung F bewegt.

An dem Gehäuse 4, insbesondere an der Antriebseinrichtung 16, ist ein Peltier-Element 82 angeordnet. Das Peltier-Element 82 ist dazu eingerichtet, aus einer Temperaturdifferenz zwischen einer Gehäusetemperatur und einer Umgebungstemperatur des Gehäuses 4 elektrische Energie zu generieren. Alternativ oder zusätzlich weist der Kondensatableiter 2 eine externe Energieversorgung auf. Das Peltier-Element 82 ist mit der Antriebseinrichtung 16 und/oder der Steuerungseinrichtung 72 verbunden. Die von dem Peltier-Element 82 generierte elektrische Energie wird zum Betrieb der Antriebseinrichtung 16 und der Steuerungseinrichtung 72 verwendet. Die Steuerungseinrichtung 72 weist ferner eine Datenschnittstelle auf, die in den Figuren nicht weiter detailliert ist. Die Datenschnittstelle ist dazu eingerichtet, Daten von einem drahtgebundenen oder drahtlosen Netzwerk zu empfangen und/oder Daten an ein drahtgebundenes oder drahtloses Netzwerk zu senden, wobei die Daten wenigstens eines der Folgenden aufweisen: Messwerte wenigstens eines der Sensoren 72, 78, 80, Position des Läufers 28 als Indikator für die Ventilstellung, Steuerungsdaten zur Steuerung der Antriebseinrichtung 16.

Wie insbesondere Fig. 2 zu entnehmen ist, ist zwischen dem Läufer 28 und dem Rohr 32 ein Ausgleichsspalt 24 vorgesehen. Wie den Fig. 1 und 2 zu entnehmen ist, ist mit dem Läufer 28 über ein Lager 47 eine Antriebsstange 46 verbunden. Die Antriebsstange 46 wiederum ist durch ein Langloch 43 des Rollkugelhebels 42 geführt und zwei Stifte 50 sorgen für die axiale Verbindung. Die Stifte 50 bewirken, dass die Antriebsstange 46 den Rollkugelhebel 42 "mitnimmt" Mit der Antriebsstange 46 ist ferner eine Gleithülse 52 verbunden, die an einem Stellungsgeber 54 gestützt ist. Durch eine Bewegung der Antriebsstange 46 erfolgt eine Bewegung des Rollkugelhebels 42. Wie insbesondere aus Fig. 2 zu entnehmen, weist der Läufer 28 ein Endstück 86 auf. Ferner weist die Antriebseinrichtung 16 ein Antriebsgehäuse 92 auf, welches über eine Gehäuseverschraubung 90 mit dem Gehäuse 4 verschraubt ist. Wie bereits ausgeführt, befindet sich der Ventilkörper 14 in dem in der Fig. 3 gezeigten Zustand in der Schließstellung S.

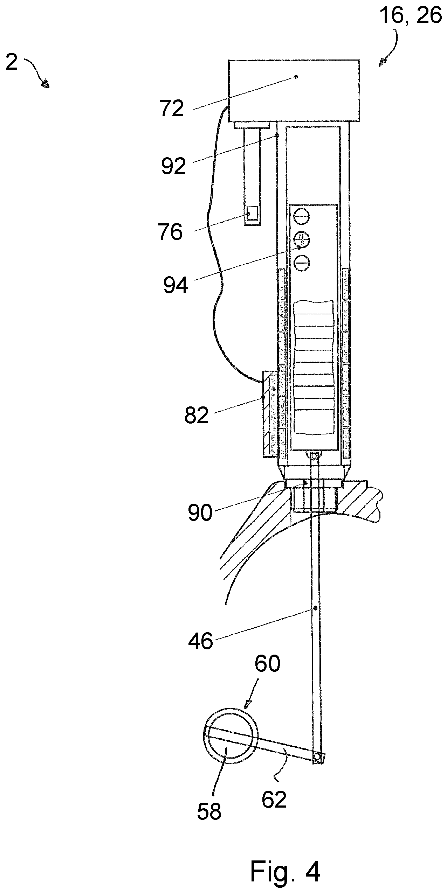

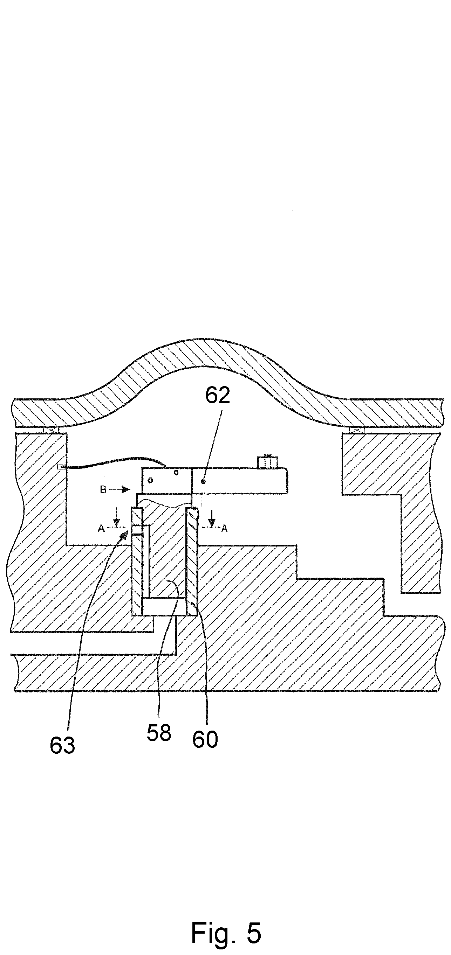

Das Ausführungsbeispiel gemäß den Fig. 4 und 5 macht sich die in Bezug auf die Fig. 1 bis 3 beschriebene Antriebseinrichtung 16 zunutze. Im Unterschied hierzu verfügt die in Fig. 4 gezeigte Antriebseinrichtung 16 über einen Hall-Sensor 76. Der Hall-Sensor 76 ist dazu eingerichtet, eine Position des Läufers 28 zu sensieren und aus der Position des Läufers 28 eine Ventilstellung zu ermitteln. Die Antriebsstange 46 wirkt in dem Ausführungsbeispiel der Fig. 4 und 5 auf einen als Ventilstift 58 ausgebildeten Ventilkörper 14. Der Ventilstift 58 ist drehbar an einer Ventilbuchse 60 aufgenommen. Der Ventilstift 58 weist eine Auslassnut 61 auf, welche in der Freigabestellung F mit einer in der Ventilbuchse 60 ausgebildeten Durchlassöffnung 63 in fluidleitender Verbindung steht und einen Fluidfluss durch das Ventil 12 freigibt und in der Schließstellung S einen Fluidfluss durch das Ventil 12 sperrt, wobei der Ventilkörper 14 insbesondere zusätzlich in eine Zwischenstellung Z bringbar ist, in der die Auslassnut 61 zumindest teilweise in fluidleitender Verbindung mit der Durchlassöffnung 63 steht. Dieser Zusammenhang ist insbesondere Fig. 5 zu entnehmen. Der Ventilstift 58 ist mit einem Hebel 62 verbunden, der wiederum mit dem Läufer 28 über die Antriebsstange 46 verbunden ist. Die Verbindung ist derart ausgebildet, dass eine translatorische Bewegung des Läufers 28 den Ventilstift 58 rotatorisch von der Freigabestellung F in die Sperrstellung S und umgekehrt bewegt. Der Läufer 28 weist ferner Gebermagneten 94 auf

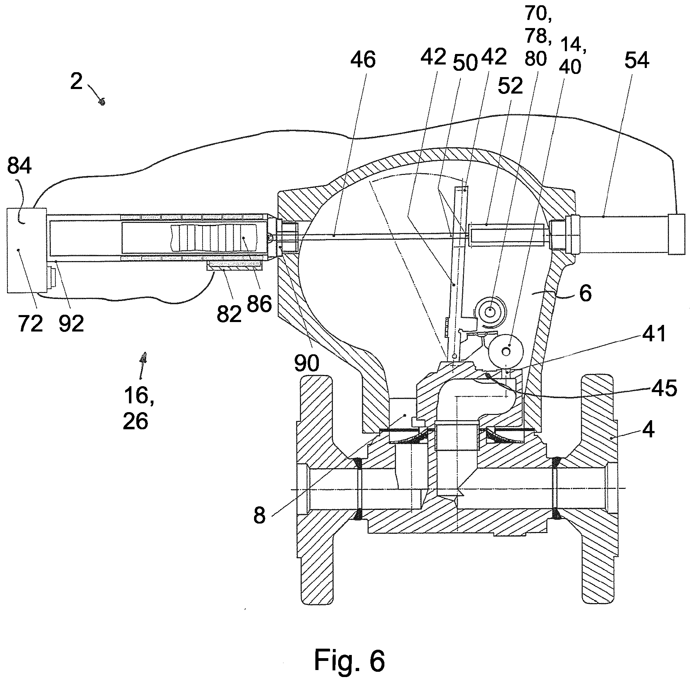

In dem in der Fig. 6 gezeigten Ausführungsbeispiel wird der Kondensatableiter 2 im Gegensatz zu dem in den Fig. 1 bis 3 gezeigten Ausführungsbeispiel im Wesentlichen waagerecht durchströmt. Der Läufer 28 des Linearmotors 26 wird in eine im Wesentlichen waagerechte Richtung angetrieben. Im Übrigen wird auf die Beschreibung zu den Fig. 1 bis 3 verwiesen.

Im Unterschied zu dem erstgenannten Ausführungsbeispiel weist der Kondensatableiter 2 gemäß Fig. 6 darüber hinaus kein Federelement 44 zur Stützung des Rollkugelhebels 42 auf. Dies liegt darin begründet, dass aufgrund der waagerechten Anordnung des Läufers 28 die Betätigungskräfte in beide Hebelrichtungen vergleichbar sind. Für eine stabile Öffnungsstellung sorgt eine Mulde 45, in die die Rollkugel 40 rollt.

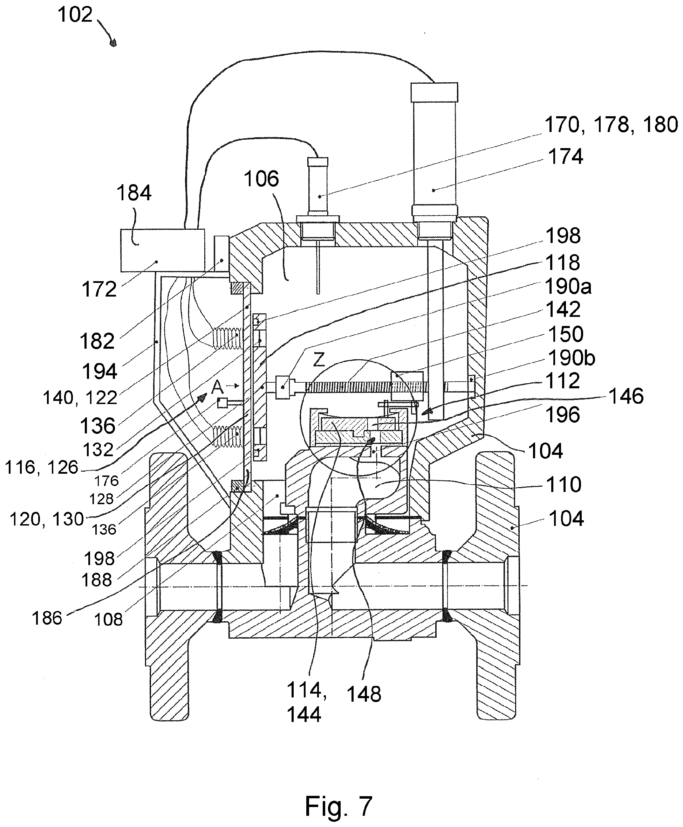

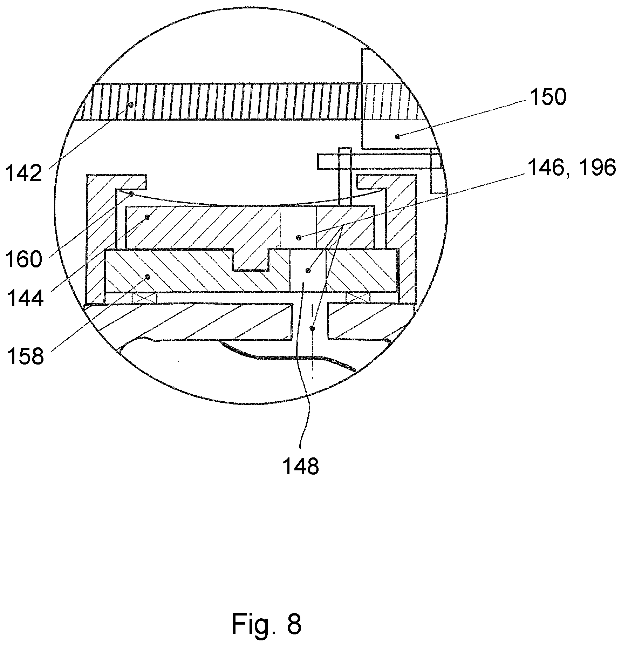

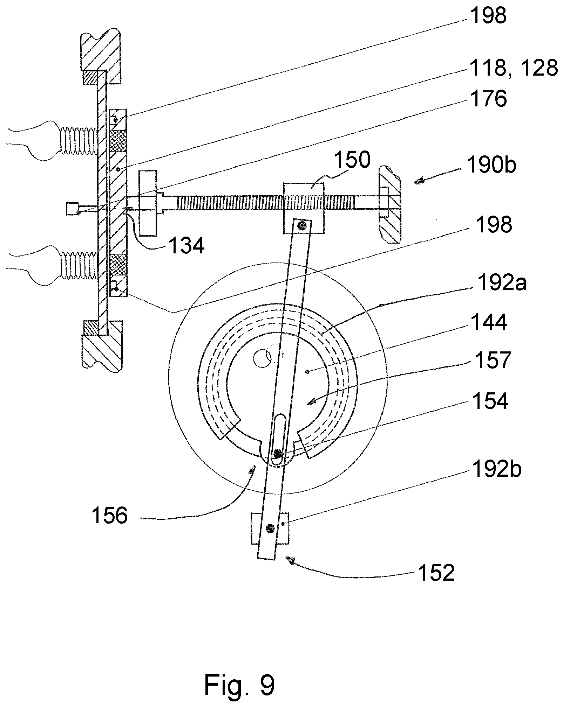

Die Fig. 7 bis 9 zeigen ein weiteres Ausführungsbeispiel eines Kondensatableiters 102 zum Ableiten von Kondensat. Der Kondensatableiter 102 weist ein Gehäuse 104 auf. In dem Gehäuse 104 ist ein Innenraum 106 zur Aufnahme eines Fluids ausgebildet. In dem Gehäuse 104 ist ferner ein Einlass 108 zum Einlassen von Fluid in den Innenraum 106 des Gehäuses 104 ausgebildet. In dem Gehäuse 104 ist ferner ein Auslass 110 zum Ableiten von Fluid aus dem Innenraum 106 des Gehäuses 104 ausgebildet. In dem Gehäuse 104 ist ein Ventil 112 mit einem Ventilkörper 114 angeordnet. Der Ventilkörper 114 ist dazu eingerichtet, in eine Freigabestellung F, siehe Fig. 7 sowie 8, und eine Schließstellung S bewegt zu werden. Der Ventilkörper 114 gibt in der Freigabestellung F einen Fluidfluss zwischen dem Innenraum 106 und dem Auslass 110 frei.

In der Schließstellung S gibt der Ventilkörper 114 einen Fluidfluss zwischen dem Innenraum 106 und dem Auslass 110 nicht frei, das heißt, der Fluidfluss wird gesperrt. Der Kondensatableiter 102 weist ferner eine Antriebseinrichtung 116 zum Bewegen des Ventilkörpers 114 auf. Die Antriebseinrichtung 116 ist dazu eingerichtet, den Ventilkörper 114 in die Freigabestellung F und die Schließstellung S zu bewegen. Die Antriebseinrichtung 116 ist als magnetisch wirkender Antrieb 116, insbesondere als Direktantrieb 116, ausgebildet und von einem Antriebsgehäuse 194 umhaust. Die Antriebseinrichtung 116 weist ein bewegliches Antriebsteil 118 auf. Das bewegliche Antriebsteil 118 ist in dem Innenraum 106 des Gehäuses 104 angeordnet und ist mit dem Ventilkörper 114 gekoppelt. Der Kondensatableiter 102 weist ferner ein statisches Antriebsteil 120 auf, welches außerhalb des Innenraums 106 angeordnet und insbesondere mittels eines Wandabschnitts 122 von diesem fluiddicht separiert ist. Das statische Antriebsteil 120 ist dazu eingerichtet, das bewegliche Antriebsteil 118 mittels einer magnetischen Antriebskraft anzutreiben.

Die Antriebseinrichtung 116 ist vorliegend als Axialflussmotor 126 ausgebildet. Das bewegliche Antriebsteil 118 ist als Rotor 128 ausgebildet. Das statische Antriebsteil 120 ist als Stator 130 ausgebildet. Der Rotor 128 weist drei oder mehr Permanentmagneten 132, insbesondere sechs Permanentmagneten 132 auf, welche äquidistant von einer Drehachse 134 des Rotors 128 und in eine Umfangsrichtung gleichmäßig voneinander beabstandet angeordnet sind. Der Rotor 128 weist ferner Gebermagneten 198 auf.

Der Stator 130 weist wenigstens drei Spulen 136, insbesondere sechs Spulen 136 auf. Die Spulen 136 sind dazu eingerichtet, ein magnetisches Feld zum Antrieb des Rotors 128 zu erzeugen. Die Spulen 136 weisen den gleichen Abstand von der Drehachse 134 des Rotors 128 auf wie die Magneten 132. Die Spulen 136 weisen ferner einen ferromagnetischen Kern 138 zur Verstärkung des Magnetfeldes auf. Der Rotor 128 ist innenseitig einer Gehäusewand 140 des Innenraums 106 aufgenommen, auch als magnetisches Fenster 186 bezeichnet. Der Stator 130 ist außenseitig der Gehäusewand 140 bzw. des magnetischen Fensters 186 angeordnet. Der Rotor 128 ist drehfest mit einer Spindel 142 verbunden, wobei die Spindel 142 drehbeweglich an dem Gehäuse 104 gelagert ist.

Der Ventilkörper 114 ist als um eine Drehachse drehbare Scheibe 144 mit einer Durchlassausnehmung 146 ausgebildet. Die Durchlassausnehmung 146 kann durch Rotation der Scheibe 144 in die Freigabestellung F derart in Überdeckung mit einem Strömungskanal 148 gebracht werden, der als Auslassbohrung 196 ausgebildet ist, dass eine fluidleitende Verbindung zu dem Auslass 110 freigegeben wird und die Scheibe 144 durch Rotation in die Schließstellung S eine fluidleitende Verbindung zu dem Auslass sperrt.

Die Spindel 142 weist einen Spindelläufer 150 auf, der über einen Betätigungsabschnitt 156 mit der Scheibe 144 derart gekoppelt ist, dass eine axiale Bewegung des Spindelläufers 150 entlang der Spindel 142 eine Rotation der Scheibe 144 in die Freigabestellung F und die Schließstellung S bewirkt. Der Betätigungsabschnitt 156 ist an einem dem Spindelläufer 150 abgewandten Ende schwenkbar gelagert. Die Scheibe 144 weist einen Nocken 154 auf, der an einer Nut 157 des Betätigungsabschnitts 156 beweglich geführt ist, derart, dass eine Schwenkbewegung des Betätigungsabschnitts 156 eine Rotation der Scheibe 144 bewirkt.

Die Scheibe 144 ist vorliegend eine obere Scheibe 144, wobei unterhalb der oberen Scheibe 144 eine untere Scheibe 158 angeordnet ist, die als Drehlager für die obere Scheibe 144 dient, wobei insbesondere die obere Scheibe 144 mittels eines Federelements 160 gegen die untere Scheibe 158 gedrückt wird. Die Scheiben 144, 158 sind aus einem keramischen Werkstoff ausgebildet.

Der Kondensatableiter 102 weist ferner eine Sensoreinrichtung 170 auf. Der Kondensatableiter 102 weist darüber hinaus eine Steuerungseinrichtung 172 auf, die dazu eingerichtet ist, die Antriebseinrichtung 116 anzusteuern. Die Sensoreinrichtung 170 weist eine an dem Gehäuse 104 ausgebildete Niveauelektrode 174 auf. Die Niveauelektrode 174 ist dazu eingerichtet, ein Fluidniveau in dem Gehäuse 104 zu sensieren. Die Sensoreinrichtung 170 weist ferner einen Hall-Sensor 176 auf. Der Hall-Sensor 176 ist dazu eingerichtet, eine Position des Rotors 128 zu sensieren und aus der Position des Rotors 128 eine Ventilstellung zu ermitteln. Die Sensoreinrichtung 170 weist ferner einen in dem Gehäuse 104 aufgenommenen Drucksensor 178 und einen Temperatursensor 180 auf.

Die Steuerungseinrichtung 172 ist kabelgebunden oder kabellos signalleitend mit den Sensoren 174, 176, 178, 180 verbunden. Die Steuerungseinrichtung 172 ist dazu eingerichtet, die Antriebseinrichtung 116 derart anzusteuern, dass diese den Ventilkörper 114 in Abhängigkeit von einem Messwert wenigstens eines der Sensoren 174, 176, 178, 180 in die Schließstellung S oder die Freigabestellung F bewegt. An dem Gehäuse 104 ist ferner ein Peltier-Element 182 angeordnet. Das Peltier-Element 182 ist dazu eingerichtet, aus einer Temperaturdifferenz zwischen einer Gehäusetemperatur und einer Umgebungstemperatur des Gehäuses 104 elektrische Energie zu generieren. Alternativ oder zusätzlich weist der Kondensatableiter 102 eine externe Energieversorgung (nicht gezeigt) auf. Das Peltier-Element 182 ist mit der Antriebseinrichtung 116 und der Steuerungseinrichtung 172 verbunden, wobei die von dem Peltier-Element 182 generierte elektrische Energie zum Betrieb der Antriebseinrichtung 116 und der Steuerungseinrichtung 172 verwendet wird.

Das magnetische Fenster 186 ist mit dem Gehäuse 104 mittels einer Gehäuseverschraubung 188 verschraubt. Die Spindel 142 ist darüber hinaus mittels Lagern 190a, 190b an dem Gehäuse 104 gelagert. Der Betätigungsabschnitt 156 ist mittels Lagerböcken 192a, 192b gelagert, wobei der Lagerbock 192b als Schwenklager 152 ausgebildet ist.

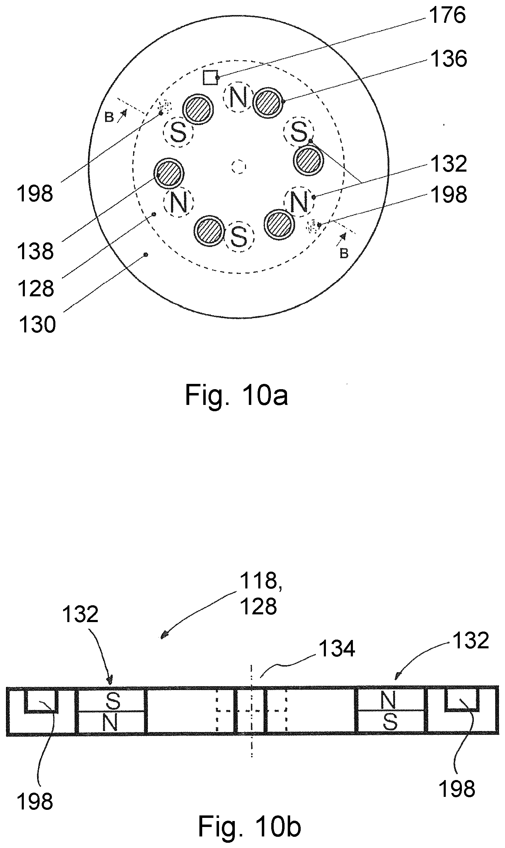

Fig. 10a zeigt den Rotor 128. Der Rotor 128 weist Permanentmagneten 132 auf, die mit den Spulen 138 des Stators 130 (nicht gezeigt) interagieren. Die Spulen 138 weisen einen ferromagnetischen Kern 138 auf. Auf dem Rotor 128 sind ferner Gebermagneten 198 angeordnet, wie auch in Fig. 10b gezeigt. Der Hall-Sensor 176 ermöglicht die Positionsüberwachung des Rotors 128.

### Bezugszeichenliste

- 2: Kondensatableiter
- 4: Gehäuse
- 6: Innenraum
- 8: Einlass
- 10: Auslass
- 12: Ventil
- 14: Ventilkörper
- 16: Antriebseinrichtung (elektromagnetischer Antrieb)
- 18: bewegliches Antriebsteil
- 20: statisches Antriebsteil
- 22: Wandabschnitt
- 24: Ausgleichsspalt
- 26: Linearmotor
- 28: Läufer
- 30: Stator
- 32: Rohr
- 33: Rohrinnenseite
- 34: Permanentmagneten (Ring- oder Scheibenmagnet)
- 35: Rohraußenseite
- 36: Distanzstück
- 38: Spule
- 40: Rollkugel
- 41: Ventilsitz
- 42: Rollkugelhebel
- 43: Langloch
- 44: Federelement
- 45: Mulde
- 46: Antriebsstange
- 47: Lager
- 50: Stift
- 52: Gleithülse
- 54: Stellungsgeber
- 58: Ventilstift
- 60: Ventilbuchse
- 61: Auslassnut
- 62: Hebel
- 63: Durchlassöffnung
- 70: Sensoreinrichtung
- 72: Steuerungseinrichtung
- 76: Hall-Sensor
- 78: Drucksensor
- 80: Temperatursensor
- 82: Peltier-Element
- 84: Datenschnittstelle
- 86: Endstück Läufer
- 88: Federlager
- 90: Gehäuseverschraubung
- 92: Antriebsgehäuse
- 94: Gebermagnet
- 102: Kondensatableiter
- 104: Gehäuse
- 106: Innenraum
- 108: Einlass
- 110: Auslass
- 112: Ventil
- 114: Ventilkörper
- 116: Antriebseinrichtung (elektromagnetischer Antrieb)
- 118: bewegliches Antriebsteil
- 120: statisches Antriebsteil
- 122: Wandabschnitt
- 126: Axialflussmotor
- 128: Rotor (Antriebsscheibe)
- 130: Stator
- 132: Permanentmagnet
- 134: Drehachse des Rotors
- 136: Spule
- 138: ferromagnetischen Kern
- 140: Gehäusewand
- 142: Spindel
- 144: drehbare Scheibe
- 146: Durchlassausnehmung
- 148: Strömungskanal
- 150: Spindelläufer
- 152: Schwenklager
- 154: Nocken der Scheibe
- 156: Betätigungsabschnitt
- 157: Nut des Betätigungsabschnitts
- 158: untere Scheibe
- 160: Federelement
- 170: Sensoreinrichtung
- 172: Steuerungseinrichtung
- 174: Niveauelektrode
- 176: Hall-Sensor
- 178: Drucksensor
- 180: Temperatursensor
- 182: Peltier-Element
- 184: Datenschnittstelle
- 186: magnetisches Fenster
- 188: Gehäuseverschraubung
- 190a: Lager für Spindel
- 190b: Lager für Spindel
- 192a: Lagerbock
- 192b: Lagerbock
- 194: Antriebsgehäuse
- 196: Auslassbohrung
- 198: Gebermagnet
- F: Freigabestellung
- S: Schließstellung
- Z: Zwischenstellung

## Patentansprüche

1. . Kondensatableiter (2, 102) zum Ableiten von Kondensat, mit
einem Gehäuse (4, 104),
einem in dem Gehäuse (4, 104) ausgebildeten Innenraum (6, 106) zur Aufnahme eines Fluids,
einem in dem Gehäuse (4, 104) ausgebildeten Einlass (8, 108) zum Einleiten von Fluid in den Innenraum (6, 106) des Gehäuses (4, 104),
einem in dem Gehäuse (4, 104) ausgebildeten Auslass (10, 110) zum Ableiten von Fluid aus dem Innenraum (6, 106) des Gehäuses (4, 104),
einem in dem Gehäuse (4, 104) angeordneten Ventil (12, 112) mit einem Ventilkörper (14, 1 14), welcher dazu eingerichtet ist, in eine Freigabestellung (F) und eine Schließstellung (S) bewegt zu werden, wobei der Ventilkörper (14, 1 14) in der Freigabestellung (F) einen Fluidfluss zwischen dem Innenraum (6, 106) und dem Auslass (10, 1 10) freigibt und in der Schließstellung (S) einen Fluidfluss zwischen dem Innenraum (6, 106) und dem Auslass (10, 110) sperrt,
einer Antriebseinrichtung (16, 116) zum Bewegen des Ventilkörpers (14, 114), welche dazu eingerichtet ist, den Ventilkörper (14, 1 14) in die Freigabestellung (F) und/oder die Schließstellung (S) zu bewegen,
wobei die Antriebseinrichtung (16, 1 16) als elektromagnetischer oder magnetisch wirkender Antrieb (16, 116) ausgebildet ist oder einen elektromagnetischen Antrieb (16, 116) aufweist, wobei die Antriebseinrichtung (16, 116) ein bewegliches Antriebsteil (18, 1 18) aufweist, welches in dem Innenraum (6, 106) des Gehäuses (4, 104) angeordnet ist und mit dem Ventilkörper (14, 114) gekoppelt ist,
**dadurch gekennzeichnet, dass**
ein statisches Antriebsteil (20, 120) außerhalb des Innenraums (6, 106) angeordnet ist und mittels eines Wandabschnitts (22, 122) von diesem fluiddicht separiert ist, wobei das statische Antriebsteil (20, 120) dazu eingerichtet ist, das bewegliche Antriebsteil (18, 118) mittels einer magnetischen Antriebskraft anzutreiben.

2. Kondensatableiter (2) nach Anspruch 1, wobei die Antriebseinrichtung (16) als Linearmotor (26) ausgebildet ist und wobei das bewegliche Antriebsteil (18) als Läufer (28) und das statische Antriebsteil (20) als Stator (30) ausgebildet ist, wobei die Antriebseinrichtung (16) ein Rohr (32) aufweist, welches innenseitig mit dem Gehäuse (4, 104) fluidleitend verbunden ist und in dessen Inneren (33) der Läufer (28) aufgenommen ist, und dessen Außenseite (35) gegenüber dem Gehäuse (4, 104) abgedichtet ist, wobei der Stator (30) an der Außenseite (35) des Rohrs (32) angeordnet oder ausgebildet ist.

3. Kondensatableiter (2) nach Anspruch 2, wobei der Linearmotor (26) dazu eingerichtet ist, eine Position des Läufers (28) kapazitativ zu ermitteln.

4. Kondensatableiter (2) nach einem der vorstehenden Ansprüche, wobei der Ventilkörper (14) als Rollkugel (40) ausgebildet ist, welche dazu eingerichtet ist, in der Freigabestellung (F) einen Ventilsitz (41) des Ventils (12) freizugeben und in der Sperrstellung (S) den Ventilsitz (41) zu verschließen.

5. Kondensatableiter (2) nach einem der vorstehenden Ansprüche, wobei der Ventilkörper (14) dazu eingerichtet ist, den Ventilsitz (41) in wenigstens einer Zwischenstellung (Z), welche zwischen der Freigabestellung (F) und der Sperrstellung (S) angeordnet ist, abschnittsweise freizugeben.

6. Kondensatableiter (2) nach einem der vorstehenden Ansprüche,
wobei die Rollkugel (40) an einem Rollkugelhebel (42) angeordnet ist und wobei der Rollkugelhebel (42) mit dem Läufer (28) derart verbunden ist, dass eine translatorische Bewegung des Läufers (28) die Rollkugel (40) von der Freigabestellung (F) in die Sperrstellung (S) und umgekehrt bewegt, und
wobei der Rollkugelhebel (42) mittels eines Federelements (44) derart am Gehäuse (4) gestützt ist, dass eine Bewegung des Rollkugelhebels (42) in die Freigabestellung (F) durch eine Federkraft des Federelements (44) unterstützt wird und eine Bewegung des Rollkugelhebels (42) in die Schließstellung (S) das Federelement (44) spannt.

7. Kondensatableiter (102) nach Anspruch 1 oder 2, wobei die Antriebseinrichtung (116) als Axialflussmotor (126) ausgebildet ist und wobei das bewegliche Antriebsteil (1 18) als Rotor (128) und das statische Antriebsteil (120) als Stator (130) ausgebildet ist.

8. Kondensatableiter (102) nach Anspruch 7, wobei der Rotor (128) drei oder mehr Permanentmagneten (132), insbesondere sechs Permanentmagneten (132), aufweist, welche insbesondere äquidistant von einer Drehachse (134) des Rotors (128) und in Umfangsrichtung gleichmäßig voneinander beabstandet sind, und wobei der Stator (130) drei oder mehr Spulen (136), insbesondere sechs Spulen (136), aufweist, die dazu eingerichtet sind, ein magnetisches Feld zum Antrieb des Rotors (128) zu erzeugen, wobei die Spulen (136) insbesondere den gleichen Abstand von der Drehachse (134) des Rotors (128) aufweisen wie die Magneten (132),
insbesondere wobei wenigstens eine, insbesondere sämtliche der Spulen (136), einen ferromagnetischen Kern (138) zur Verstärkung des Magnetfelds aufweisen.

9. Kondensatableiter (102) nach einem der Ansprüche 7 oder 8, wobei der Rotor (128) innenseitig einer Gehäusewand (140) des Innenraums (106) aufgenommen ist und wobei der Stator (130) außenseitig von der Gehäusewand (140) angeordnet ist.

10. Kondensatableiter (102) nach einem der Ansprüche 7-9, wobei der Rotor (128) drehfest mit einer Spindel (142) verbunden ist, und wobei die Spindel (142) drehbeweglich an dem Gehäuse (104) gelagert ist.

11. Kondensatableiter (102) nach einem der Ansprüche 7-10, wobei der Ventilkörper (114) als um eine Drehachse drehbare Scheibe (144) mit einer Durchlassausnehmung (146) ausgebildet ist, wobei die Durchlassausnehmung (146) durch Rotation der Scheibe (144) in die Freigabestellung (F) derart in Überdeckung mit einem Strömungskanal (148) gebracht wird, dass eine fluidleitende Verbindung zu dem Auslass (1 10) freigegeben wird und die Scheibe (144) durch Rotation in die Schließstellung (S) eine fluidleitende Verbindung zu dem Auslass (110) sperrt.

12. Kondensatableiter (102) nach einem der Ansprüche 10 oder 11, wobei die Spindel (142) einen Spindelläufer (150) aufweist, der über einen Betätigungsabschnitt (156) mit der Scheibe (144) derart gekoppelt ist, dass eine axiale Bewegung des Spindelläufers (150) entlang der Spindel (142) eine Rotation der Scheibe (144) in die Freigabestellung (F) und die Schließstellung (S) bewirkt, und wobei insbesondere der Betätigungsabschnitt (156) an einem dem Spindelläufer (150) abgewandten Ende schwenkbar gelagert ist, und wobei die Scheibe (144) einen Nocken (154) aufweist, der in einer Nut (157) des Betätigungsabschnitts (156) beweglich geführt ist, derart, dass eine Schwenkbewegung des Betätigungsabschnitts (156) eine Rotation der Scheibe (144) bewirkt.

13. Kondensatableiter (102) nach einem der Ansprüche 11 oder 12, wobei die Scheibe (144) eine obere Scheibe (144) ist und wobei unterhalb der oberen Scheibe (144) eine untere Scheibe (158) angeordnet ist, die als Drehlager für die obere Scheibe (144) dient, wobei insbesondere die obere Scheibe (144) mittels eines Federelements (160) gegen die untere Scheibe (158) gedrückt wird, wobei insbesondere wenigstens eine der Scheiben (144, 158), insbesondere beide Scheiben (144, 158) aus einem keramischen Werkstoff ausgebildet sind.

14. Kondensatableiter (2) nach einem der vorstehenden Ansprüche, wobei der Ventilkörper (14) als Ventilstift (58) ausgebildet ist, welcher drehbar in einer Ventilbuchse (60) aufgenommen ist, und wobei der Ventilstift (58) eine Auslassnut (61) aufweist, welche in der Freigabestellung (F) mit einer in der Ventilbuchse (60) ausgebildeten Durchlassöffnung (63) in fluidleitender Verbindung steht und einen Fluidfluss durch das Ventil (12) freigibt und in der Schließstellung (S) einen Fluidfluss durch das Ventil (12) sperrt, wobei der Ventilkörper (14) insbesondere zusätzlich in eine Zwischenstellung (Z) bringbar ist, in der die Auslassnut (61) zumindest teilweise in fluidleitender Verbindung mit der Durchlassöffnung (63) steht.

15. Kondensatableiter (2) nach Anspruch 14, wobei der Ventilstift (58) mit einem Hebel (62) verbunden ist und wobei der Hebel (62) mit dem Läufer (28) derart verbunden ist, dass eine translatorische Bewegung des Läufers (28) den Ventilstift (58) rotatorisch von der Freigabestellung (F) in die Sperrstellung (S) und umgekehrt bewegt.

## Claims

1. A condensate drain (2, 102) for draining condensate, with a housing (4, 104),
an interior space (6, 106) formed in the housing (4, 104) for receiving a fluid,
an inlet (8, 108) formed in the housing (4, 104) for introducing fluid into the interior space (6, 106) of the housing (4, 104), an outlet (10, 110) formed in the housing (4, 104) for draining fluid from the interior space (6, 106) of the housing (4, 104), a valve (12, 112) arranged in the housing (4, 104) with a valve body (14, 114) which is configured to be moved into a release position (F) and a closed position (S), wherein the valve body (14, 114) in the release position (F) allows a fluid flow between the interior space (6, 106) and the outlet (10, 110) and in the closed position (S) blocks a fluid flow between the interior space (6, 106) and the outlet (10, 110),
a drive device (16, 116) for moving the valve body (14, 114), which is configured to move the valve body (14, 114) into the release position (F) and/or the closed position (S),
wherein the drive device (16, 116) is designed as an electromagnetic or magnetically acting drive (16, 116) or has an electromagnetic drive (16, 116), wherein the drive device (16, 116) has a movable drive part (18, 118) which is arranged in the interior space (6, 106) of the housing (4, 104) and is coupled to the valve body (14, 114),
**characterized in that**
a static drive component (20, 120) is arranged outside the interior space (6, 106)
and is fluid-tightly separated from it by means of a wall section (22, 122), wherein the static drive part (20, 120) is configured to drive the movable drive part (18, 118) by means of a magnetic driving force.

2. The condensate drain (2) according to claim 1, wherein the drive device (16) is designed as a linear motor (26) and wherein the movable drive part (18) is designed as a slider (28) and the static drive part (20) as a stator (30), wherein the drive device (16) has a tube (32) which is fluidly connected to the housing (4, 104) on the inside and in the interior (33) of which the slider (28) is received, and the outside (35) of which is sealed against the housing (4, 104), wherein the stator (30) is arranged or formed on the outside (35) of the tube (32).

3. The condensate drain (2) according to claim 2, wherein the linear motor (26) is configured to capacitively determine a position of the slider (28).

4. The condensate drain (2) according to any one of the preceding claims, wherein the valve body (14) is designed as a rolling ball (40) which is configured to release a valve seat (41) of the valve (12) in the release position (F) and to close the valve seat (41) in the blocking position (S).

5. The condensate drain (2) according to any one of the preceding claims, wherein the valve body (14) is designed to release in sections the valve seat (41) in at least one intermediate position (Z), which is arranged between the release position (F) and the blocking position (S).

6. The condensate drain (2) according to any one of the preceding claims,
wherein the rolling ball (40) is arranged on a rolling ball lever (42) and wherein the rolling ball lever (42) is connected to the slider (28) such that a translational movement of the slider (28) moves the rolling ball (40) from the release position (F) to the blocking position (S) and vice versa, and
wherein the rolling ball lever (42) is supported on the housing (4) by means of a spring element (44) such that a movement of the rolling ball lever (42) into the release position (F) is supported by a spring force of the spring element (44) and a movement of the rolling ball lever (42) into the closing position (S) tensions the spring element (44).

7. The condensate drain (102) according to claim 1 or 2, wherein the drive device (116) is designed as an axial flux motor (126) and wherein the movable drive part (118) is designed as a rotor (128) and the static drive part (120) is designed as a stator (130).

8. The condensate drain (102) according to claim 7, wherein the rotor (128) has three or more permanent magnets (132), in particular six permanent magnets (132), which are in particular equidistant from an axis of rotation (134) of the rotor (128) and spaced uniformly apart from one another in the circumferential direction, and wherein the stator (130) has three or more coils (136), in particular six coils (136), which are arranged to generate a magnetic field for driving the rotor (128), wherein the coils (136) in particular have the same distance from the axis of rotation (134) of the rotor (128) as the magnets (132),
in particular wherein at least one, in particular all of the coils (136), have a ferromagnetic core (138) for reinforcing the magnetic field.

9. The condensate drain (102) according to any one of claims 7 or 8, wherein the rotor (128) is received inside a housing wall (140) of the interior space (106) and wherein the stator (130) is arranged outside of the housing wall (140).

10. The condensate drain (102) according to any one of claims 7-9, wherein the rotor (128) is non-rotatably connected to a spindle (142), and wherein the spindle (142) is rotatably mounted on the housing (104).

11. The condensate drain (102) according to any one of claims 7-10, wherein the valve body (114) is designed as a disk (144) rotatable about an axis of rotation with a passage recess (146), wherein the passage recess (146) is brought into the release position (F) by rotation of the disk (144) as to be superimposed on a flow channel (148) in such a way that a fluid-conducting connection to the outlet (110) is released and the disk (144) blocks a fluid-conducting connection to the outlet (110) by rotation into the closed position (S).

12. The condensate drain (102) according to any one of claims 10 or 11, wherein the spindle (142) has a spindle slider (150) which is coupled to the disk (144) via an actuating section (156) such that an axial movement of the spindle slider (150) along the spindle (142) causes a rotation of the disk (144) into the release position (F) and the closed position (S), and wherein in particular the actuating section (156) is pivotably mounted at an end facing away from the spindle slider (150), and wherein the disk (144) has a cam (154) which is movably guided in a groove (157) of the actuating section (156) such that a pivoting movement of the actuating section (156) causes a rotation of the disk (144).

13. The condensate drain (102) according to any one of claims 11 or 12, wherein the disk (144) is an upper disk (144) and wherein a lower disk (158) is arranged below the upper disk (144), which serves as a pivot bearing for the upper disk (144), wherein in particular the upper disk (144) is pressed against the lower disk (158) by means of a spring element (160), wherein in particular at least one of the disks (144, 158), in particular both disks (144, 158) are made of a ceramic material.

14. The condensate drain (2) according to any one of the preceding claims, wherein the valve body (14) is designed as a valve pin (58) rotatably received in a valve bushing (60), and wherein the valve pin (58) has an outlet groove (61) which, in the release position (F), is in fluid-conducting communication with a passage opening (63) formed in the valve bushing (60) and releases a fluid flow through the valve (12) and, in the closed position (S), blocks a fluid flow through the valve (12), wherein the valve body (14) can in particular additionally be brought into an intermediate position (Z) in which the outlet groove (61) is at least partially in fluid-conducting communication with the passage opening (63).

15. The condensate drain (2) according to claim 14, wherein the valve pin (58) is connected to a lever (62) and wherein the lever (62) is connected to the slider (28) such that a translational movement of the slider (28) moves the valve pin (58) rotationally from the release position (F) to the blocking position (S) and vice versa.

## Revendications

1. Purgeur de condensat (2, 102) destiné à évacuer un condensat, comprenant
un boîtier (4, 104),
un espace intérieur (6, 106) formé dans le boîtier (4, 104) pour recevoir un fluide,
une entrée (8, 108) formée dans le boîtier (4, 104) pour introduire du fluide dans l'espace intérieur (6, 106) du boîtier (4, 104),
une sortie (10, 110) formée dans le boîtier (4, 104) pour évacuer le fluide de l'espace intérieur (6, 106) du boîtier (4, 104),
une soupape (12, 112) disposée dans le boîtier (4, 104) et comprenant un corps de soupape (14, 114) configuré pour être déplacé dans une position de déverrouillage (F) et une position fermée (S), dans lequel le corps de soupape (14, 114) en position de déverrouillage (F) permet un flux de fluide entre l'espace intérieur (6, 106) et la sortie (10, 110) et en position fermée (S) bloque un flux de fluide entre l'espace intérieur (6, 106) et la sortie (10, 110),
un dispositif d'entraînement (16, 116) pour déplacer le corps de soupape (14, 114), configuré pour déplacer le corps de soupape (14, 114) en position de déverrouillage (F) et/ou en position fermée (S),
dans lequel le dispositif d'entraînement (16, 116) est conçu comme un entraînement électromagnétique ou à effet magnétique (16, 116) ou comporte un entraînement électromagnétique (16, 116), dans lequel le dispositif d'entraînement (16, 116) comporte une partie d'entraînement mobile (18, 118) qui est disposée dans l'espace intérieur (6, 106) du boîtier (4, 104) et est couplée au corps de soupape (14, 114),
**caractérisé en ce que**
une partie d'entraînement statique (20, 120) est disposée à l'extérieur de l'espace intérieur (6, 106)
et est séparé de celui-ci de manière étanche aux fluides à l'aide d'une section de paroi (22, 122), dans lequel la partie d'entraînement statique (20, 120) est configurée pour entraîner la partie d'entraînement mobile (18, 118) à l'aide d'une force d'entraînement magnétique.

2. Purgeur de condensat (2) selon la revendication 1, dans lequel le dispositif d'entraînement (16) est conçu comme un moteur linéaire (26) et dans lequel la partie d'entraînement mobile (18) est conçue comme un coulisseau (28) et la partie d'entraînement statique (20) comme un stator (30), dans lequel le dispositif d'entraînement (16) comporte un tube (32) qui est relié fluidiquement au boîtier (4, 104) à l'intérieur et dans lequel intérieur (33) le coulisseau (28) est reçu, et dont l'extérieur (35) est étanchéifié par rapport au boîtier (4, 104), dans lequel le stator (30) est disposé ou formé à l'extérieur (35) du tube (32).

3. Purgeur de condensat (2) selon la revendication 2, dans lequel le moteur linéaire (26) est configuré pour déterminer de manière capacitive une position du coulisseau (28).

4. Purgeur de condensat (2) selon l'une quelconque des revendications précédentes, dans laquelle le corps de soupape (14) est conçu comme une bille (40) configurée pour libérer un siège de soupape (41) de la soupape (12) en position de déverrouillage (F) et pour fermer le siège de soupape (41) en position de verrouillage (S).

5. Purgeur de condensat (2) selon l'une quelconque des revendications précédentes, dans lequel le corps de soupape (14) est configuré pour libérer par sections le siège de soupape (41) dans au moins une position intermédiaire (Z) située entre la position de déverrouillage (F) et la position de verrouillage (S).

6. Purgeur de condensat (2) selon l'une quelconque des revendications précédentes,
dans lequel la bille (40) est disposée sur un levier à bille (42) et dans lequel le levier à bille (42) est relié au coulisseau (28) de sorte qu'un mouvement de translation du coulisseau (28) déplace la bille (40) de la position de déverrouillage (F) à la position de verrouillage (S) et inversement, et
dans lequel le levier à bille (42) est supporté sur le boîtier (4) à l'aide d'un élément ressort (44) de sorte qu'un mouvement du levier à bille (42) en position de déverrouillage (F) est supporté par une force de ressort de l'élément ressort (44) et qu'un mouvement du levier à bille (42) en position de fermeture (S) tend l'élément ressort (44).

7. Purgeur de condensat (102) selon la revendication 1 ou 2, dans lequel le dispositif d'entraînement (116) est conçu comme un moteur à flux axial (126) et dans lequel la partie d'entraînement mobile (118) est conçue comme un rotor (128) et la partie d'entraînement statique (120) est conçue comme un stator (130).

8. Purgeur de condensat (102) selon la revendication 7, dans lequel le rotor (128) comporte trois aimants permanents (132) ou plus, en particulier six aimants permanents (132), qui sont en particulier équidistants d'un axe de rotation (134) du rotor (128) et uniformément espacés les uns des autres dans la direction circonférentielle, et dans lequel le stator (130) comporte trois bobines (136) ou plus, en particulier six bobines (136), qui sont disposées pour générer un champ magnétique pour entraîner le rotor (128), dans lequel les bobines (136) présentent en particulier la même distance de l'axe de rotation (134) du rotor (128) que les aimants (132),
en particulier dans lequel au moins une, en particulier toutes les bobines (136), ont un noyau ferromagnétique (138) pour renforcer le champ magnétique.

9. Purgeur de condensat (102) selon l'une quelconque des revendications 7 ou 8, dans lequel le rotor (128) est reçu à l'intérieur d'une paroi de boîtier (140) de l'espace intérieur (106) et dans lequel le stator (130) est disposé à l'extérieur de la paroi de boîtier (140).

10. Purgeur de condensat (102) selon l'une quelconque des revendications 7 à 9, dans lequel le rotor (128) est relié de manière non rotative à une broche (142), et dans lequel la broche (142) est montée de manière rotative sur le boîtier (104).

11. Purgeur de condensat (102) selon l'une quelconque des revendications 7 à 10, dans lequel le corps de soupape (114) est conçu comme un disque (144) rotatif autour d'un axe de rotation avec un évidement de passage (146), dans lequel l'évidement de passage (146) est amené en position de déverrouillage (F) par rotation du disque (144) de manière à être superposé à un canal d'écoulement (148) de sorte qu'une connexion conductrice de fluide vers la sortie (110) est libérée et le disque (144) bloque une connexion conductrice de fluide vers la sortie (110) par rotation en position fermée (S).

12. Purgeur de condensat (102) selon l'une quelconque des revendications 10 ou 11, dans lequel la broche (142) comporte un galet de broche (150) qui est couplé au disque (144) via une section d'actionnement (156) de sorte qu'un mouvement axial du galet de broche (150) le long de la broche (142) provoque une rotation du disque (144) en position de déverrouillage (F) et en position fermée (S), et dans lequel en particulier la section d'actionnement (156) est montée de manière pivotante à une extrémité opposée au galet de broche (150), et dans lequel le disque (144) comporte une came (154) qui est guidée de manière mobile dans une rainure (157) de la section d'actionnement (156) de sorte qu'un mouvement de pivotement de la section d'actionnement (156) provoque une rotation du disque (144).

13. Purgeur de condensat (102) selon l'une quelconque des revendications 11 ou 12, dans lequel le disque (144) est un disque supérieur (144) et dans lequel un disque inférieur (158) est disposé sous le disque supérieur (144), qui sert de palier de pivot pour le disque supérieur (144), dans lequel en particulier le disque supérieur (144) est pressé contre le disque inférieur (158) au moyen d'un élément ressort (160), dans lequel en particulier au moins un des disques (144, 158), en particulier les deux disques (144, 158) sont en matériau céramique.

14. Purgeur de condensat (2) selon l'une quelconque des revendications précédentes, dans lequel le corps de soupape (14) est conçu comme une tige de soupape (58) reçue de manière rotative dans une douille de soupape (60), et dans lequel la tige de soupape (58) a une rainure de sortie (61) qui, en position de déverrouillage (F), est en communication conductrice de fluide avec une ouverture de passage (63) formée dans la douille de soupape (60) et libère un flux de fluide à travers la soupape (12) et, en position fermée (S), bloque un flux de fluide à travers la soupape (12), dans lequel le corps de soupape (14) peut en particulier être amené en outre dans une position intermédiaire (Z) dans lequel la rainure de sortie (61) est au moins partiellement en communication conductrice de fluide avec l'ouverture de passage (63).

15. Purgeur de condensat (2) selon la revendication 14, dans lequel la tige de soupape (58) est reliée à un levier (62) et dans lequel le levier (62) est relié au coulisseau (28) de sorte qu'un mouvement de translation du coulisseau (28) déplace la tige de soupape (58) en rotation de la position de déverrouillage (F) à la position de verrouillage (S) et inversement.
